# FASCICULE DE BREVET EUROPEEN

(11) **EP 2 177 025 B1**
(45) Date de publication et mention de la délivrance du brevet: **10.11.2021**
(21) Numéro de dépôt: 08787147.1
(22) Date de dépôt: 12.08.2008
(51) Int. Cl.: H04N 7/167, H04N 21/2347, H04N 21/266, H04N 21/41, H04N 21/414, H04N 21/4405, H04N 21/4627, H04N 21/6334, H04N 21/8355

(54) **PROCÉDÉ ET DISPOSITIF DE CHIFFREMENT PARTIEL D'UN CONTENU NUMÉRIQUE**
VERFAHREN UND VORRICHTUNG ZUR PARTIELLEN VERSCHLÜSSELUNG DIGITALER INHALTE
METHOD AND DEVICE FOR THE PARTIAL ENCRYPTION OF A DIGITAL CONTENT

(30) Priorité: 13.08.2007 FR 0705838
(43) Date de publication de la demande: 21.04.2010
(73) Titulaire: Nintendo European Research and Development, 75002 Paris (FR)
(72) Inventeur: HIRIART, Laurent, 75001 Paris (FR)
(74) Mandataire: Santarelli
(86) Numéro de dépôt international: PCT/EP2008/060594
(87) Numéro de publication internationale: WO 2009/021953

(56) Documents cités:
- FR-A- 2 854 706
- US-A1- 2006 002 552
- US-A1- 2007 083 467
- LIU X ET AL: "Selective encryption of multimedia content in distribution networks: challenges and new directions" PROCEEDINGS OF THE IASTED INTERNATIONAL CONFERENCE COMMUNICATIONS, INTERNET AND INFORMATION TECHNOLOGY, XX, XX, 2003, pages 527-533, XP002437000
- KUNDUR D ET AL: "Video fingerprinting and encryption principles for digital rights management" PROCEEDINGS OF THE IEEE, IEEE. NEW YORK, US, vol. 92, no. 6, juin 2004 (2004-06), pages 918-932, XP002436642 ISSN: 0018-9219
- VAN MOFFAERT A ET AL: "DIGITAL RIGHTS MANAGEMENT: DRM is a key enabler for the future growth of the broadband access market, and the telecom/networking market in general" ALCATEL TELECOMMUNICATIONS REVIEW, ALCATEL, PARIS CEDEX, FR, avril 2003 (2003-04), XP007005930 ISSN: 1267-7167
- MARC A KAPLAN: "IBM Cryptolopes, SuperDistribution and Digital Rights Management" INTERNET CITATION, [Online] 30 décembre 1996 (1996-12-30), XP002132994 Extrait de l'Internet: URL:http://www.research.ibm.com/people/k/k aplan/cryptolope-docs/crypap.html> [extrait le 2000-03-14]

## Description

La présente invention concerne un procédé de chiffrement du contenu numérique destiné à être déchiffré et restitué sur des terminaux mobiles.

Les systèmes de diffusion de contenus numériques à la demande doivent faire face à plusieurs contraintes. Une première contrainte tient à la bande passante nécessaire pour la diffusion. Cette contrainte est d'autant plus forte que la base d'utilisateurs est grande et que le contenu numérique à diffuser est important. Elle est donc particulièrement forte dans le cas de la diffusion de contenu vidéo à destination du grand public. Une autre contrainte est la gestion des droits numériques et les techniques utilisées pour lutter contre l'utilisation illégale des contenus ainsi diffusés. Par ailleurs, lorsque ces contenus numériques sont destinés à des terminaux mobiles, il est avantageux que la puissance de calcul, nécessaire au déchiffrement de ces contenus, soit aussi limitée que possible. En effet, ces terminaux possèdent généralement une puissance de calcul limitée. De plus, certains terminaux fonctionnent généralement grâce à une source d'énergie limitée et donc moins le déchiffrement consomme d'énergie, meilleure est l'autonomie en énergie du terminal.

US2007/083467 décrit des exemples de techniques de cryptage partiel pour les données multimédias.

La présente invention vise à résoudre les contraintes précédentes par un procédé de chiffrement de contenus numériques permettant de limiter la puissance de calcul, nécessaire au déchiffrement, et donc l'énergie utilisée pour ce faire. Le contenu diffusé est chiffré de manière partielle. Une signature des en-têtes des images assure l'intégrité des données.

La solution proposée permet d'implémenter d'une part une diffusion efficace des contenus permettant d'alléger le procédé de déchiffrement sans compromettre la protection du contenu contre les usages frauduleux.

L'invention concerne un procédé de chiffrement d'un contenu numérique divisé en unités de restitution appelées images, chaque image comprenant un en-tête et un contenu, qui comprend une étape de chiffrement partiel du contenu à l'aide d'une clé symétrique.

Selon un mode particulier de réalisation de l'invention, un même pourcentage du contenu de chaque image est chiffré.

Selon un mode particulier de réalisation de l'invention, les images étant de plusieurs types, seul le contenu des images d'un type donné est chiffré au moins partiellement.

Selon un mode particulier de réalisation de l'invention, le contenu de chaque image étant compressé, les différents types d'images étant définis par le mode de compression de l'image, un premier type d'images étant compressé de manière intrinsèque, le ou les autres types d'images étant compressés à partir d'au moins certaines images du premier type, seul le contenu des images du premier type est chiffré au moins partiellement.

Selon un mode particulier de réalisation de l'invention, une somme de contrôle est calculée sur le contenu au moins des images dont le contenu est chiffré au moins partiellement, cette somme de contrôle étant signée à l'aide d'une clé et introduite dans l'en-tête desdites images

Selon un mode particulier de réalisation de l'invention, le pourcentage de contenu chiffré est stocké dans l'en-tête des images chiffrées au moins partiellement.

L'invention concerne également un contenu numérique divisé en unités de restitution appelées images, chaque image comprenant un en-tête et un contenu, caractérisé en ce qu'il est chiffré selon l'un des procédés précédents.

L'invention concerne également un procédé de déchiffrement d'un contenu numérique chiffré selon l'un des procédés précédents.

L'invention concerne également un terminal de restitution d'un contenu numérique caractérisé en ce qu'il comporte des moyens de déchiffrement d'un contenu numérique chiffré selon l'un des procédés précédents.

L'invention concerne également un dispositif qui comporte des moyens de chiffrement d'un contenu numérique selon l'un des procédés précédents.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture générale du mode de réalisation de l'invention.
La Fig. 2 illustre une architecture possible de la plate-forme utilisateur dans un premier mode de réalisation de l'invention.
La Fig. 3 représente le processus général d'acquisition du contenu numérique et des droits afférents.
La Fig. 4 illustre l'architecture du paquet téléchargé dans un mode de réalisation de l'invention.
La Fig. 5 illustre la procédure d'activation selon un exemple de réalisation de l'invention.
La Fig. 6 illustre le schéma de chiffrement.
La Fig. 7 illustre le processus de vérification de l'application de lecture.
La Fig. 8 illustre le schéma de chiffrement d'une image selon un mode de réalisation de l'invention.

L'invention concerne un système de distribution de contenus numériques à la demande. Dans un tel système, l'utilisateur doté d'un terminal de restitution du service et de moyens de connexion à un réseau de communication peut naviguer au sein d'une offre de service. Il peut en choisir un, l'acheter en ligne, le télécharger pour ensuite le consulter à l'aide de son terminal. De telles offres se multiplient, que ce soit dans le domaine de la musique avec des services audio ou dans le domaine vidéo avec des offres de films ou de tout autre service multimédia. Ces systèmes sont confrontés à deux contraintes principales. La première, surtout dans le domaine de la vidéo, concerne la technique de diffusion du contenu. En effet, la quantité de données à distribuer est importante, notamment pour un film complet. Ces données sont diffusées à la demande aux utilisateurs, ce qui rend difficile toute mutualisation de la diffusion entre les différents utilisateurs. La diffusion nécessite donc de grandes capacités d'envoi des données et un système de diffusion de grande bande passante pour pouvoir diffuser du contenu dédié à un grand nombre d'utilisateurs. La seconde contrainte tient au contrôle des utilisations faites du contenu. Les diffuseurs veulent garantir leurs droits et empêcher la copie illégale des contenus proposés. Pour ce faire, des systèmes de gestion de droits numériques, appelés DRM *(Digital Rights Management* en anglais) sont utilisés. Ces systèmes sont généralement basés sur le chiffrement du contenu et la distribution de clés de déchiffrement aux utilisateurs autorisés.

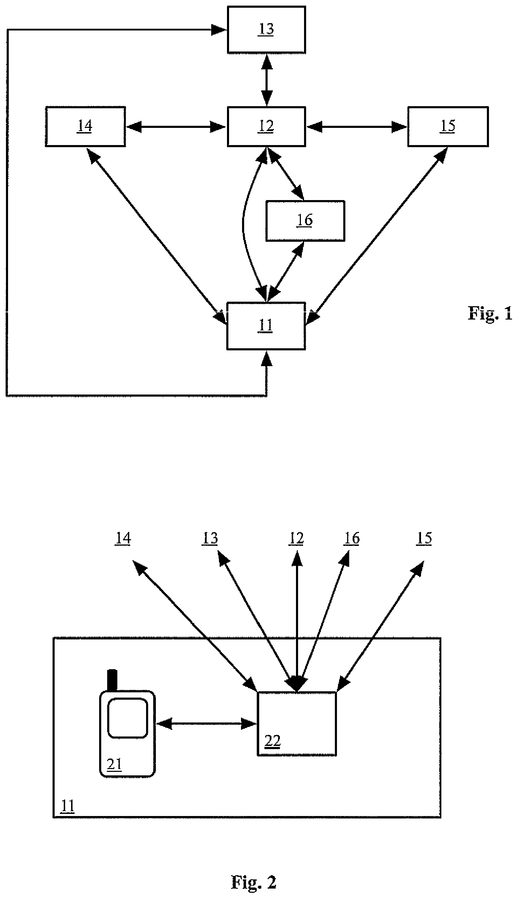

La Fig. 1 illustre l'architecture générale du mode de réalisation de l'invention. Une plate-forme utilisateur, référencée 11, est dotée de moyens de restitution des services diffusés et de moyens de connexion à un réseau de communication de données, par exemple Internet. La plate-forme utilisateur 11 communique avec un site marchand 16 pour faire le choix du contenu dont il souhaite acquérir les droits. Ce site marchand peut être un service offert par l'opérateur de téléphonie mobile et hébergé par celui-ci dans le cas où le terminal est un téléphone mobile.

La plate-forme est connectée à un serveur de contenu numérique référencé 14 qui héberge et diffuse des contenus pouvant être restitués par la plate-forme utilisateur 11. La plate-forme utilisateur est également connectée à un serveur de transactions bancaires 13 permettant d'effectuer des paiements pour les achats de droits sur les contenus numériques. La plate-forme utilisateur 11 est encore connectée à un serveur de génération de DRM 15 permettant de générer et de diffuser des fichiers de DRM. Un serveur de transaction 12 est connecté à ces différents acteurs, plate-forme utilisateur 11, serveur de transaction bancaire 13, serveur de contenu 14 et serveur de DRM 15. Ce serveur de transaction permet de mémoriser les transactions, de faire le lien entre les différents acteurs lors des différentes étapes procédant à l'acquisition d'un contenu numérique et des droits correspondants. De plus, il permet à l'utilisateur de recharger le contenu ou les droits en cas de perte de données.

L'exemple de réalisation de l'invention se place plus particulièrement dans le cadre de la diffusion de contenu à destination de terminaux mobiles comme par exemple les téléphones mobiles, mais elle peut également être implémentée dans le cadre de terminaux fixes. La Fig. 2 illustre une architecture possible de la plate-forme utilisateur dans un premier mode de réalisation de l'invention. Dans ce mode, l'utilisateur dispose d'un terminal fixe 22 à son domicile, par exemple un ordinateur personnel connecté à un réseau de communication comme Internet, un modem routeur d'accès à Internet ou encore un décodeur de télévision numérique *(Set Top Box* en anglais). Le terminal mobile 21, auquel est destiné le contenu numérique, est connecté au terminal fixe 22. L'utilisateur utilise le terminal fixe pour interagir avec les différents serveurs du système. Le contenu numérique est téléchargé par le terminal fixe, ainsi que les droits correspondants, avant sa copie sur le terminal mobile 21. Une fois le contenu et les droits copiés sur le terminal mobile 21, la consultation du contenu peut se faire de manière autonome sur le terminal mobile sans nécessiter de connexion ni avec le terminal fixe 22, ni avec les serveurs du système 12, 13, 14, 15 et 16.

Dans un mode de réalisation alternatif de l'invention, le terminal mobile possède lui-même les moyens d'accès au réseau de communication et gère directement les interactions avec les différents serveurs du système sans nécessiter la connexion à un terminal fixe. Il est également possible, dans ce cas, d'utiliser des modes de paiement par téléphone, par exemple en utilisant des numéros ou des messages courts surtaxés.

Dans ce mode, la connexion peut se faire via le canal de données de la liaison téléphonique, typiquement pour les terminaux implémentant les normes de communication de troisième génération telles que l'UMTS *(Universal Mobile Telecommunications System* en anglais) ou (E)GPRS ((*Enhanced*) *General Packet Radio Service* en anglais). La connexion peut également se faire via des moyens de communication indépendants de la liaison téléphonique, par exemple en utilisant la famille de protocole 802.11, technique connue sous le nom de WiFi. Il va de soi que toute technique de communication peut être utilisée dans ce cas entre le terminal et les serveurs dans la mesure où elle est compatible avec le téléchargement d'importantes quantités de données.

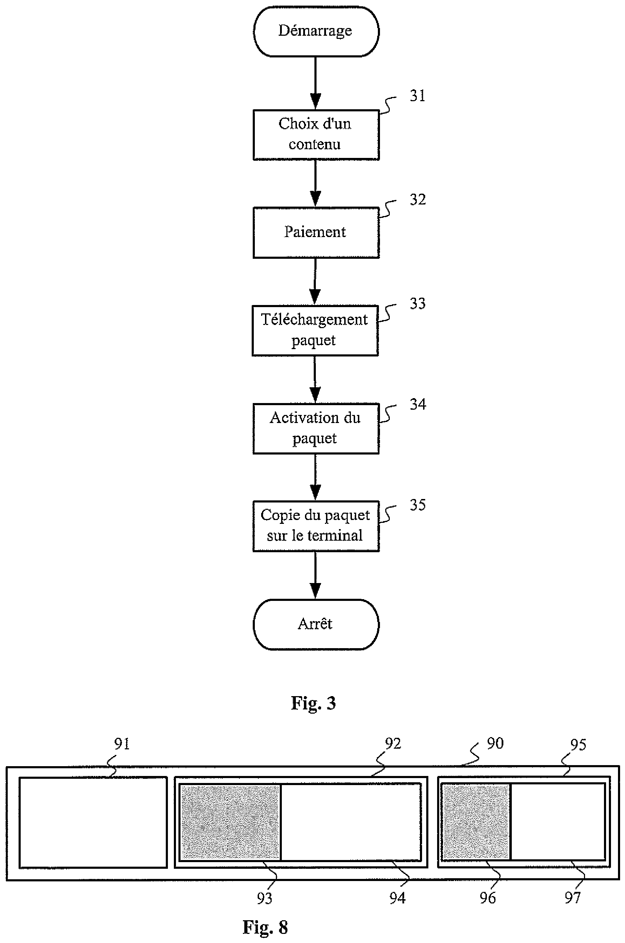

Le processus général d'acquisition du contenu numérique et des droits afférents va maintenant être décrit en référence avec la Fig. 3. Lors d'une première étape 31, l'utilisateur se connecte au site marchand 16. Sur ce site, il peut obtenir une liste des contenus disponibles et choisir celui qu'il désire. Une fois le contenu choisi, l'utilisateur effectue le paiement correspondant à son achat lors d'une étape 32. Lors de cette étape, l'utilisateur est automatiquement connecté au serveur de transactions bancaires qui lui demande ses coordonnées bancaires pour pouvoir effectuer une demande d'autorisation auprès de la banque de l'utilisateur. Les données requises sont généralement le numéro de la carte, la date d'expiration et le cryptogramme visuel. Dès réception de la réponse d'autorisation, le serveur de transaction bancaire adresse simultanément une réponse au serveur marchand ainsi qu'un ticket de caisse à l'utilisateur. Cette étape est classique et fonctionne de la même façon que pour tout site marchand accessible en ligne à l'aide d'un réseau de communication. Tous les modes d'implémentation connus, comme l'option dite *one click* permettant l'achat sans fournir ses coordonnées bancaires grâce à une mémorisation de celles-ci sur, par exemple, le serveur de transaction, sont utilisables ici.

Une fois l'achat validé, l'utilisateur reçoit une référence d'un contenu à télécharger. Cette référence peut être, par exemple, une URL (*Universal Ressource Locator* en anglais) permettant le téléchargement dudit contenu selon le protocole HTTP. Bien évidemment, tout autre mode de référence et protocole de téléchargement, par exemple le protocole de transfert de fichier FTP (*File Transfer Protocol* en anglais) peut également être utilisé. Le contenu est téléchargé sous la forme d'un paquet lors d'une étape 33.

Ce paquet est un ensemble de données comprenant le contenu et des informations utiles pour la phase subséquente d'activation, étape 34. Le paquet ainsi téléchargé est générique en ce sens que le même paquet va être téléchargé par tous les utilisateurs achetant ce contenu, ou du moins tous les utilisateurs achetant ce contenu et disposant du même modèle, ou catégorie de modèle, de terminal de restitution. Le paquet est donc générique en ce qu'il n'est pas personnalisé en fonction de l'utilisateur ayant effectué l'achat. Cette caractéristique permet d'implémenter une plate-forme de diffusion du contenu simple ne nécessitant pas de traitement du contenu préalablement à la diffusion en fonction de l'identité de l'utilisateur ayant acheté des droits relatifs à ce contenu. Préférentiellement, le contenu de ce paquet est encodé pour interdire son utilisation en omettant la phase d'activation 34. L'utilisateur télécharge donc une version générique du contenu qui n'est pas directement utilisable en l'état en vue de sa restitution.

La phase d'activation du paquet va consister à télécharger des droits relatifs au contenu compris dans le paquet, à la transaction effectuée et à l'identité du titulaire de ces droits. Plus exactement, les droits acquis par l'utilisateur sont relatifs à l'identité du terminal mobile destinataire du contenu. La procédure d'activation va être détaillée plus loin. Une fois ces droits obtenus, le contenu et les droits seront copiés lors d'une étape 35 sur le terminal mobile destinataire. Le contenu sera alors librement utilisable sur ce terminal dans le cadre des droits acquis. La restitution du contenu ne nécessite pas alors d'être connecté au réseau de communication pour fonctionner.

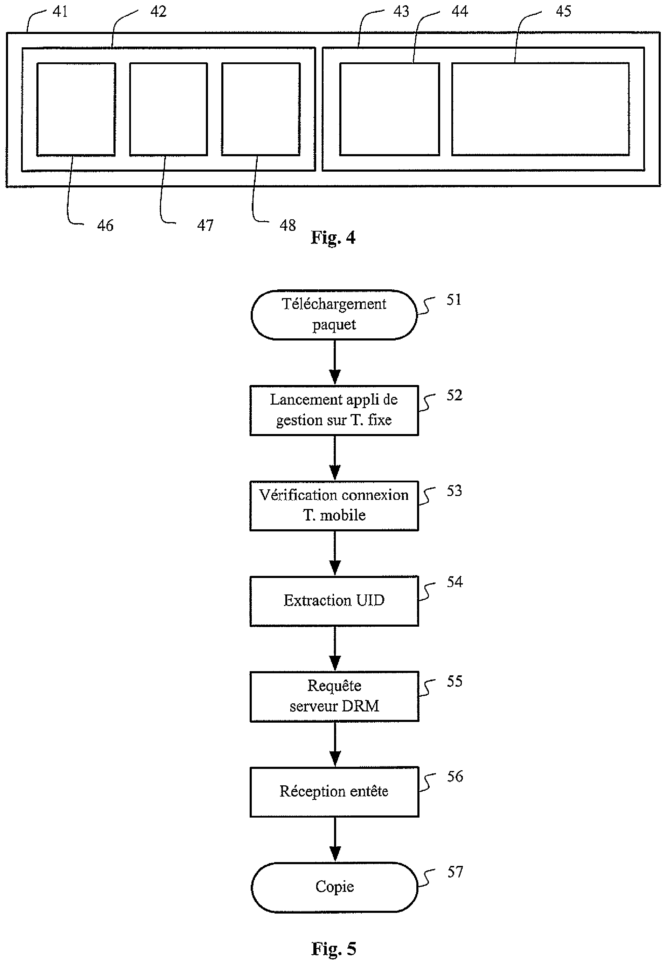

L'architecture du paquet téléchargé dans un premier mode de réalisation est illustrée Fig. 4. Cette architecture correspond à un exemple dans le cas où la plate-forme utilisateur est constituée d'un terminal de restitution mobile connecté à un terminal fixe, lui-même connecté au réseau de communication. Le paquet référencé 41 comporte le contenu multimédia 43, lui-même comportant le contenu proprement dit 45 et un en-tête référencé 44. Le paquet 41 comporte également une partie applicative 42 comportant l'application de lecture du contenu 46, une application 47 de gestion de la copie entre le terminal fixe et le terminal mobile et une application 48 de gestion de l'activation du contenu. Alternativement, l'application 47 de gestion de la copie et l'application 48 de gestion de l'activation du contenu peuvent être des paramètres destinés à une application résidente. Ce paquet est spécifique pour un type de terminal mobile de restitution.

En particulier, le contenu est adapté à certaines spécificités techniques du terminal comme la résolution, le type de processeur, la quantité de mémoire ou la puissance de calcul. De même, le paquet comportant le logiciel de lecture du contenu, ce logiciel est conçu pour le type de terminal sur lequel il est amené à s'exécuter. Dans ce mode de réalisation de l'invention, le serveur de contenu dispose d'une copie de paquet par contenu et par type de terminal mobile compatible avec le système. Par contre, le paquet n'est pas spécifique de l'utilisateur, de la transaction d'achat ni du terminal mobile particulier servant à la restitution. En ce sens, le paquet est dit générique, le même paquet étant diffusé à tous les utilisateurs achetant le même contenu à destination d'un même type de terminal mobile. Un type de terminal mobile est défini comme un ou plusieurs modèles de terminaux mobiles possédant des caractéristiques techniques communes parmi lesquelles le type de processeur et la résolution d'écran.

Dans un second mode de réalisation de l'invention, le terminal mobile se connectant directement aux différents serveurs sans passer par un terminal fixe, le paquet contient un module de vérification du type de terminal mobile en lieu et place du module de gestion de la copie entre le terminal fixe et le terminal mobile.

La Fig. 5 illustre la procédure d'activation selon un exemple de réalisation de l'invention. Lors d'une première étape 51, le paquet est téléchargé sur le terminal fixe. Ensuite, lors d'une étape 52, l'application de gestion de l'activation du contenu intégrée au paquet est alors lancée avec les paramètres intégrés au paquet. Cette application vérifie lors d'une étape 53 que le terminal mobile de destination du contenu est bien connecté au terminal fixe. Elle extrait alors du terminal mobile un identificateur unique, appelé UID (*Unique Identifier* en anglais). Cet identifiant est, par exemple, l'identifiant IMEI (*International Mobile Equipment Identity* en anglais) du terminal dans le cas d'un terminal de téléphonie. Alternativement, lorsque le contenu est destiné à être sauvegardé sur une carte mémoire, l'UID peut être l'identifiant matériel de ladite carte appelé CID (*Card Identifier* en anglais). Dans ce cas, l'application de gestion de l'activation vérifie que ladite carte est présente au sein du terminal mobile, il extrait alors le CID et le stocke sous la forme d'un fichier sur la carte lors d'une étape 54. Si la carte n'est pas présente dans le terminal mobile, l'application demande à l'utilisateur d'introduire la carte dans l'appareil. Selon l'UID choisi, IMEI ou CID, le contenu sera lié soit au terminal soit à la carte.

Une fois en possession de l'UID et de l'identificateur de contenu présent dans le paquet, l'application de gestion de l'activation est à même de générer une requête au serveur de DRM, étape 55, pour obtenir un en-tête permettant le déchiffrement du contenu. La requête doit également identifier l'utilisateur de manière à permettre la vérification de la transaction bancaire par le serveur de DRM auprès du serveur de transaction. Plusieurs solutions peuvent ici être utilisées pour obtenir l'identifiant d'utilisateur. Une première solution consiste à demander une nouvelle fois à l'utilisateur de rentrer ses informations personnelles, par exemple un nom et un mot de passe. Une autre solution consiste à mémoriser cette information, ou une référence sur cette information, entre les étapes de gestion de la transaction bancaire, les étapes de téléchargement du paquet et les étapes d'activation. Cette mémorisation peut se faire de plusieurs façons, il peut s'agir du stockage d'un enregistrement serveur (*Cookie* en anglais) au sein du navigateur lorsque le protocole HTTP (*Hyper Text Transfer Protocol* en anglais) est utilisé pour les échanges entre l'application de gestion et le serveur. Une autre possibilité de transmission automatique de l'identification de l'utilisateur entre le serveur de transaction et le serveur de DRM peut consister, pour le serveur de transaction, à stocker l'adresse IP de l'utilisateur. Le serveur de DRM utilise alors l'adresse IP source de la requête d'activation comme identificateur d'utilisateur auprès du serveur de transaction. La contrainte est ici que ce processus échoue dans le cas d'une nouvelle attribution d'adresse IP au terminal fixe, par exemple si l'activation a lieu lors d'une nouvelle session de connexion de ce terminal fixe au réseau de communication. D'autre part, plusieurs utilisateurs connectés à une même passerelle peuvent être vus par les serveurs comme ayant la même adresse IP. Un identificateur de l'utilisateur peut également être ajouté au nom du paquet téléchargé. Cet ajout se fait alors préférentiellement sur le terminal fixe servant à la gestion de la transaction bancaire et au téléchargement du paquet et non pas sur le serveur de façon à ne pas surcharger celui-ci en lui imposant un traitement. De cette façon, on ne rompt pas avec le caractère générique des paquets autorisant une gestion efficace et décentralisée de la diffusion desdits paquets. Dans ce cas, l'application de gestion de l'activation récupère cet identifiant dans le nom du paquet lors de la préparation de la requête au serveur de DRM. Finalement, cette requête comprend au moins l'identifiant de l'utilisateur, l'identifiant du contenu et l'UID de la plate-forme de restitution, le terminal ou la carte selon l'option choisie.

En réponse, l'application de gestion de l'activation reçoit du serveur de DRM un en-tête contenant les informations permettant à l'application de lecture du contenu d'en déchiffrer les données lors d'une étape 56. Cet en-tête contient, entre autres, l'UID de la plate-forme de restitution pour laquelle la transaction a été faite qui est confrontée à l'UID effectif de la plate-forme par l'application de lecture pour n'autoriser celle-ci que lorsque ces deux identifiants correspondent. Des informations relatives à la durée éventuelle de validité sont également préférentiellement présentes dans cet en-tête. Elles permettent de limiter dans le temps les droits d'accès au contenu. On peut ainsi mettre en place des mécanismes d'acquisition de contenu sous une forme de location. L'en-tête contient aussi un identificateur de la clé symétrique AES ayant servi à encoder le contenu. L'en-tête envoyé est protégé par une somme de contrôle, par exemple une fonction de hachage cryptographique SHA1 (*Secure Hash Algorithm* en anglais), cette somme de contrôle étant signée à l'aide de la clé privée du fournisseur. L'application de lecture du contenu trouve donc dans cet en-tête l'identificateur de la clé AES (*Advanced Encryption Standard* en anglais) symétrique permettant le déchiffrement du contenu, l'identificateur du terminal pour lequel le paquet est autorisé et préférentiellement les dates de validité. Elle est donc en mesure de tester si le terminal sur lequel elle s'exécute est bien le terminal autorisé ainsi que si l'on se trouve bien dans la période pour laquelle les droits ont été acquis et ainsi d'autoriser ou pas la lecture du contenu. Le paquet est ensuite copié lors d'une étape 57 sur le terminal mobile.

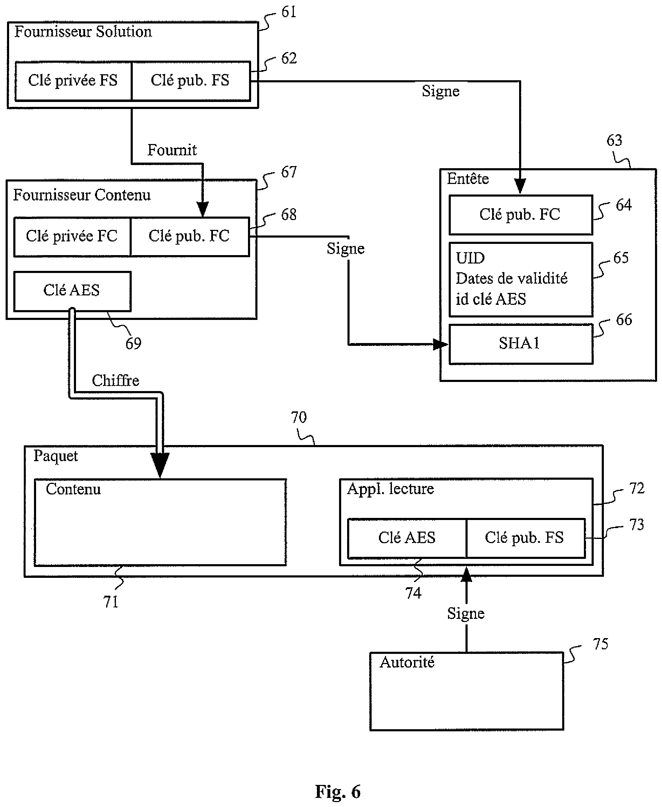

Le schéma de chiffrement est décrit Fig. 6. Le fournisseur de solution référencé 61 fournit la solution de diffusion à l'opérateur gérant la plate-forme de diffusion. Ce fournisseur de solution 61 possède un couple de clé privée, clé publique maître référencé 62. Le fournisseur de contenu 67 qui peut être ou pas l'opérateur, obtient du fournisseur de solution un couple clé privée, clé publique 68 auprès de celui-ci. Il obtient en outre une version signée par la clé maître du fournisseur de solution 62 de sa propre clé publique. Le fournisseur gère également les clés, permettant le chiffrement symétrique du contenu, référencées 69, par exemple des clés AES. Le fournisseur de contenu génère les paquets comprenant d'une part le contenu numérique chiffré 71 à l'aide d'une des clés 69. D'autre part, le paquet comprend également l'application de lecture 72 adaptée au type de terminal mobile destiné à recevoir le paquet.

Cette application de lecture contient un ensemble 74 de clés susceptibles d'être utilisées par le fournisseur de contenu pour le chiffrement du contenu. Alternativement, cet ensemble sera stocké dans un dépôt sur le terminal. Dans ce cas, les clés pourront être téléchargées préalablement ou en fonction des besoins par l'application de lecture selon un protocole de chargement de clés, par exemple le protocole de Diffie-Hellman. Les clés peuvent également être introduites dans la mémoire protégée de l'appareil à la fabrication de celui-ci. L'application de lecture contient également la clé publique maître 73 du fournisseur de solution 61. L'intégrité de l'application de lecture est garantie par le mécanisme de certification du système d'exploitation du terminal mobile. En effet, la plupart des systèmes d'exploitation permettent de n'autoriser le lancement sur l'appareil que d'applications signées à l'aide d'un certificat spécifique suite à un processus de certification permettant de garantir la conformité de l'application. Cette certification est faite par une autorité 75 généralement sous le contrôle du fabricant de terminaux.

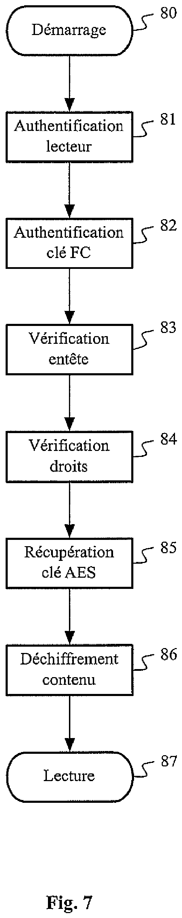

Pour pouvoir restituer le contenu, l'application de lecture effectue un certain nombre de vérifications avant d'accepter cette restitution. Le processus est illustré par la Fig. 7. Lors d'une étape 80, l'utilisateur demande le démarrage de l'application de lecture. Pour effectuer ce démarrage, le système d'exploitation du terminal mobile authentifie l'application de lecture ce qui garantit son intégrité lors de l'étape 81. Ensuite, lors d'une étape 82, l'application de lecture authentifie la validité de la clé publique du fournisseur de contenu à l'aide de la clé publique maître du fournisseur de solution. Elle peut donc, à l'aide de cette clé publique certifiée du fournisseur de solution, valider la somme de contrôle de l'en-tête et donc l'intégrité de l'en-tête lors d'une étape 83. Les données de l'en-tête étant validées, elle est en mesure de vérifier les droits de lecture du contenu lors de l'étape 84. Cette vérification comprend la vérification de la correspondance de l'UID contenu dans l'en-tête et de celui du terminal ou de la carte. Préférentiellement, elle vérifie également les dates de validité contenues dans l'en-tête. Une fois ces validations effectuées, elle détermine la clé ayant servi au chiffrement du contenu et dont une référence est présente dans l'en-tête. Elle retrouve cette clé, soit dans la liste des clés qu'elle possède, soit dans un registre sur le téléphone. Alternativement, elle peut également la demander sous la forme d'une requête via un protocole de téléchargement de clé. C'est l'étape 85. Une fois en possession de la clé, elle peut déchiffrer le contenu lors d'une étape 86 et enfin lire ce contenu lors de l'étape 87.

La puissance de calcul des terminaux mobiles étant limitée, il est avantageux de proposer des schémas de chiffrement du contenu qui permettent un déchiffrement ne nécessitant pas une grande puissance de calcul. Mais les contraintes de sécurité imposent un schéma qui soit tout de même robuste pour limiter les possibilités de déchiffrement frauduleux. Le contenu vidéo est composé d'une succession d'images. Ces images sont généralement compressées selon un schéma de la famille des standards MPEG (*Moving Picture Experts Group* en anglais). Ces schémas ont en commun le principe de diviser la succession des images en groupe ou GOP (*Group Of Picture* en anglais). Ces groupes commencent par une image de type I (pour *Intra coded picture* en anglais) qui est une image de référence compressée de manière intrinsèque. C'est-à-dire que la décompression d'une telle image ne dépend que des données de l'image elle-même. Suivent des images de type P (pour *Predictive coded picture* en anglais). Ces images sont compressées à partir des informations des images de types I ou P précédentes. En fait, seules les différences entre ces images et l'image précédente I ou P sont compressées. Le groupe peut ensuite contenir des images de type B (pour *Bidirectionally predictive coded pictures* en anglais) qui sont compressées à partir des images précédentes et suivantes. Lors de la décompression, on doit donc commencer par décompresser une image de type I avant de pouvoir décompresser les images suivantes du groupe de type P. L'image suivante de type I est indispensable également pour la décompression des images de type B. Sans l'information des images de type I, les images de type P ou B ne peuvent pas être décompressées. Dans la suite, on utilise le terme image (*frame* en anglais) de manière plus générale pour représenter l'unité de restitution du contenu et ceci quel que soit le type de contenu. En particulier, l'image contient non seulement l'image vidéo mais aussi le contenu audio associé à l'image vidéo. Le terme image sera également utilisé pour du contenu non vidéo tel que du contenu purement audio ou autre.

La Fig. 8 illustre le schéma de chiffrement d'une image selon un mode de réalisation de l'invention. L'image, référencée 90, est composée d'un en-tête 91 et d'une partie de données vidéo 92 ainsi qu'une partie audio 95. L'en-tête 91 contient, entre autres, un numéro de séquence de l'image, permettant de contrôler que les images sont bien toutes celles du contenu original en séquence. Avantageusement, l'en-tête contient également l'identifiant du contenu. Cet en-tête possède une somme de contrôle de l'image complète, par exemple de type SHA1, signé par la clé du fournisseur d'accès. Grâce à cette signature on garantit que l'image est intègre.

On se prémunit ainsi contre toute manipulation du contenu visant à changer l'ordre des images ou à insérer des séquences extérieures au contenu original. L'application de lecture du contenu vérifie la signature et l'intégrité de chaque image lors de la restitution. Selon une variante de réalisation, cette vérification est réalisée aléatoirement sur certaines images seulement pour alléger le processus de restitution. Selon une autre variante de réalisation de l'invention, seules les images de type I possèdent cette somme de contrôle signée.

De façon à diminuer la puissance de calcul nécessaire au déchiffrement du contenu, seule une portion, grisée sur la Fig. 8, du contenu est chiffrée. Le contenu vidéo 92 comprend donc une première partie chiffrée 93 et une seconde partie non chiffrée 94. De même, le contenu audio 95 de l'image 90 comprend une première partie chiffrée 96 et une seconde partie non chiffrée 97. Le chiffrement est effectué à l'aide de la clé symétrique 74 de la Fig. 6. Avantageusement, le pourcentage de contenu chiffré est stocké dans l'en-tête de l'image. Ce pourcentage peut varier en fonction de la capacité de calcul de la plate-forme de destination destinée à la lecture du contenu. Selon une variante d'implémentation, seules les images de type I seront partiellement chiffrées. Avantageusement, le chiffrement au moins partiel du contenu des images est associé au stockage d'une somme de contrôle signée par une clé asymétrique dans l'en-tête de l'image comme décrit au paragraphe précédent. Grâce à cette méthode, on diminue la puissance de calcul nécessaire au déchiffrement du contenu lors de la lecture tout en garantissant que le contenu non chiffré n'est pas exploitable sans la partie chiffrée.

## Revendications

1. Procédé de chiffrement d'un contenu numérique divisé en unités de restitution appelées images (90), chaque image comprenant un entête (91) et une partie de données vidéo (92), **caractérisé en ce qu'**il comprend pour au moins certaines images :
- une étape de séparation de la partie de données vidéo (92) en deux parties, une première partie chiffrée (93) à l'aide d'une clé symétrique et une second partie non chiffrée (94), la taille de la première partie chiffrée (93) constituant un pourcentage donné de la partie de données vidéo (92) de l'image (90), le pourcentage de contenu chiffré étant stocké dans l'en-tête de l'image

2. Procédé de chiffrement selon la revendication 1, **caractérisé en ce que** ce pourcentage est le même pour chaque image chiffrée.

3. Procédé de chiffrement selon la revendication 1, **caractérisé en ce que**, les images étant de plusieurs types, seul la partie de données vidéo des images d'un type donné est chiffré.

4. Procédé de chiffrement selon la revendication 3, le contenu de chaque image étant compressé, les différents types d'images étant définis par le mode de compression de l'image, un premier type d'images étant compressé de manière intrinsèque, le ou les autres types d'images étant compressées à partir d'au moins certaines images du premier type, seul le contenu des images du premier type est chiffré.

5. Procédé de chiffrement selon l'une des revendications 1 à 4, **caractérisé en ce que** une somme de contrôle est calculée sur le contenu au moins des images dont la partie de données vidéo est chiffrée, cette somme de contrôle étant signée à l'aide d'une clé et introduite dans l'entête desdites images.

6. Contenu numérique divisé en unités de restitution appelées images, chaque image comprenant un entête et une partie de données vidéo, **caractérisé en ce qu'**il est chiffré selon l'un des procédés revendiqué dans l'une des revendications 1 à 5.

7. Procédé de déchiffrement d'un contenu numérique chiffré selon l'un des procédés revendiqué dans l'une des revendications 1 à 5.

8. Terminal de restitution d'un contenu numérique **caractérisé en ce qu'**il comporte des moyens de déchiffrement d'un contenu numérique chiffré selon l'un des procédés revendiqué dans l'une des revendications 1 à 5.

9. Dispositif de chiffrement d'un contenu numérique **caractérisé en ce qu'**il comporte des moyens de chiffrement d'un contenu numérique selon l'un des procédés revendiqué dans l'une des revendications 1 à 5.

## Patentansprüche

1. Verfahren zum Verschlüsseln eines digitalen Inhalts, der in Wiedergabeeinheiten, Bilder (90) genannt, unterteilt ist, wobei jedes Bild einen Header (91) und einen Videodatenanteil (92) umfasst,
**dadurch gekennzeichnet, dass** es zumindest für bestimmte Bilder umfasst:
- einen Schritt des Trennens des Videodatenanteils (92) in zwei Teile, einen unter Verwendung eines symmetrischen Schlüssels verschlüsselten ersten Teil (93) und einen unverschlüsselten zweiten Teil (94), wobei die Größe des verschlüsselten ersten Teils (93) einen gegebenen Prozentsatz des Videodatenanteils (92) des Bildes (90) ausmacht, wobei der Prozentsatz des verschlüsselten Inhalts im Header des Bildes gespeichert ist.

2. Verschlüsselungsverfahren nach Anspruch 1,
**dadurch gekennzeichnet, dass** dieser Prozentsatz für jedes verschlüsselte Bild gleich ist.

3. Verschlüsselungsverfahren nach Anspruch 1,
**dadurch gekennzeichnet, dass** bei mehreren Bildtypen nur der Videodatenanteil der Bilder eines gegebenen Typs verschlüsselt wird.

4. Verschlüsselungsverfahren nach Anspruch 3,
wobei der Inhalt jedes Bildes komprimiert wird, wobei die verschiedenen Bildtypen durch den Komprimierungsmodus des Bildes definiert sind, wobei ein erster Bildtyp inhärent komprimiert wird, der bzw. die anderen Bildtypen zumindest ausgehend von bestimmten Bildern des ersten Typs komprimiert werden, und wobei nur der Inhalt der Bilder des ersten Typs verschlüsselt wird.

5. Verschlüsselungsverfahren nach einem der Ansprüche 1 bis 4,
**dadurch gekennzeichnet, dass** eine Prüfsumme über den Inhalt zumindest derjenigen Bilder berechnet wird, deren Videodatenanteil verschlüsselt wird, wobei diese Prüfsumme mit einem Schlüssel signiert und in den Header der genannten Bilder eingefügt wird.

6. Digitaler Inhalt, der in Wiedergabeeinheiten, Bilder genannt, unterteilt ist,
wobei jedes Bild einen Header und einen Videodatenanteil umfasst, **dadurch gekennzeichnet, dass** er nach einem der in einem der Ansprüche 1 bis 5 beanspruchten Verfahren verschlüsselt ist.

7. Verfahren zum Entschlüsseln eines digitalen Inhalts, der nach einem der in einem der Ansprüche 1 bis 5 beanspruchten Verfahren verschlüsselt wurde.

8. Endgerät zur Wiedergabe eines digitalen Inhalts,
**dadurch gekennzeichnet, dass** es Mittel zum Entschlüsseln eines digitalen Inhalts enthält, der nach einem der in einem der Ansprüche 1 bis 5 beanspruchten Verfahren verschlüsselt wurde.

9. Vorrichtung zum Verschlüsseln eines digitalen Inhalts,
**dadurch gekennzeichnet, dass** sie Mittel zum Verschlüsseln eines digitalen Inhalts nach einem der in einem der Ansprüche 1 bis 5 beanspruchten Verfahren enthält.

## Claims

1. Method of enciphering a digital content divided into retrievable units referred to as pictures (90), each picture comprising a header (91) and a video data part (92), **characterised in that** it comprises, for at least some pictures:
- a step of separating the video data part (92) into two parts, a first part (93) enciphered by means of a symmetrical key and a second non-enciphered part (94), the size of the first enciphered part (93) constituting a given percentage of the video data part (92) of the picture (90), the percentage of enciphered content being stored in the picture header.

2. Enciphering method according to claim 1, **characterised in that** this percentage is the same for each enciphered picture.

3. Enciphering method according to claim 1, **characterised in that**, the pictures being of several types, only the video data part of the pictures of a given type is enciphered.

4. Enciphering method according to claim 3, the content of each picture being compressed, the various types of picture being defined by the picture compression mode, a first type of picture being compressed intrinsically, the other type or types of picture being compressed using at least some pictures of the first type, only the content of the pictures of the first type is enciphered.

5. Enciphering method according to one of claims 1 to 4, **characterized in that** a checksum is calculated on the content at least of the pictures of which the video data part is enciphered, this checksum being signed by means of a key and introduced into the header of the said pictures.

6. Digital content divided into retrievable units referred to as pictures, each picture comprising a header and a video data part, **characterised in that** it is enciphered according to one of the methods claimed in one of claims 1 to 5.

7. Method of deciphering a digital content enciphered according to one of the methods claimed in one of claims 1 to 5.

8. Terminal for retrieving a digital content, **characterised in that** it comprises means of deciphering a digital content enciphered according to one of the methods claimed in one of claims 1 to 5.

9. Device for enciphering a digital content, **characterised in that** it comprises means of enciphering a digital content enciphered according to one of the methods claimed in one of claims 1 to 5.
